# EUROPEAN PATENT APPLICATION

(11) **EP 4 300 847 A1**
(43) Date of publication of application: **03.01.2024**
(21) Application number: 22774228.5
(22) Date of filing: 22.03.2022
(51) Int. Cl.: H04B 10/071

(54) **LIGHT-SPLITTING APPARATUS, LIGHT-SPLITTING SYSTEM, PASSIVE OPTICAL NETWORK AND OPTICAL FIBER FAULT DETECTION METHOD**

(30) Priority: 26.03.2021 CN 202110328513
(71) Applicant: Huawei Technologies Co., Ltd., Shenzhen, Guangdong 518129 (CN)
(72) Inventor: LIN, Huafeng, Shenzhen, Guangdong 518129 (CN); WAN, Xifeng, Shenzhen, Guangdong 518129 (CN); LI, Shu, Shenzhen, Guangdong 518129 (CN)
(74) Representative: MERH-IP Matias Erny Reichl Hoffmann Patentanwälte PartG mbB
(86) International application number: PCT/CN2022/082237
(87) International publication number: WO 2022/199572

(57) **Abstract**

This application discloses an optical splitting apparatus, an optical splitting system, a passive optical network, and an optical fiber fault detection method. The optical splitting apparatus includes a first optical splitting unit, a plurality of first optical path processing units, and a second optical path processing unit. The first optical splitting unit includes a first port and a plurality of second ports, and the first port is separately connected to the plurality of second ports. The first optical path processing unit includes a third port, a fourth port, and a fifth port, and the fifth port is separately connected to the third port and the fourth port. The second optical path processing unit includes a sixth port, a seventh port, and an eighth port, and the sixth port is separately connected to the seventh port and the eighth port. The third port is connected to the second port through a first optical fiber, the fourth port is connected to a second optical fiber, and the fifth port is connected to a branch fiber. The sixth port is connected to a feeder fiber, the seventh port is connected to the first port through a third optical fiber, and the eighth port is connected to a fourth optical fiber.

## Description

This application claims priority to Chinese Patent Application No. 202110328513.5, filed with the China National Intellectual Property Administration on March 26, 2021 and entitled "OPTICAL SPLITTING APPARATUS, OPTICAL SPLITTING SYSTEM, PASSIVE OPTICAL NETWORK, AND OPTICAL FIBER FAULT DETECTION METHOD", which is incorporated herein by reference in its entirety.

### TECHNICAL FIELD

This application relates to the field of optical communications technologies, and in particular, to an optical splitting apparatus, an optical splitting system, a passive optical network, and an optical fiber fault detection method.

### BACKGROUND

A passive optical network (passive optical network, PON) includes an optical line termination (optical line termination, OLT), an optical network unit (optical network unit, ONU), and an optical distribution network (optical distribution network, ODN). The ODN mainly includes components such as an optical fiber and a beam splitter. To ensure that the entire PON works normally, fault detection needs to be performed on the optical fiber in the ODN.

In a related technology, an optical time domain reflectometer (optical time domain reflectometer, OTDR) is used to perform the fault detection on the optical fiber. The OTDR directly transmits a pulse optical signal for the fault detection to a feeder fiber. The pulse optical signal enters a branch fiber from the feeder fiber through the beam splitter and is propagated in the branch fiber. Scattering, reflection, and the like occur during a propagation process of the pulse optical signal in the feeder fiber and the branch fiber. The OTDR receives a formed reflected optical signal, and outputs an OTDR test curve based on the reflected optical signal, an ODN event in the OTDR test curve is identified to realize optical fiber fault detection. The ODN event can reflect whether the optical fiber is faulty and reflect a fault type when the optical fiber is faulty.

In the related technology, the pulse optical signal sent by the OTDR to the feeder fiber passes through the beam splitter, and after passing through the beam splitter, the pulse optical signal enters a plurality of branch fibers at the same time, so that the OTDR receives reflected optical signals reflected by the plurality of branch fibers. Superimposition of the reflected optical signals leads to an inaccurate ODN event identified from the reflected optical signals, and consequently, optical fiber fault detection cannot be accurately implemented.

### SUMMARY

This application provides an optical splitting apparatus, an optical splitting system, a passive optical network, and an optical fiber fault detection method. By configuring monitoring ports in the optical splitting apparatus, where these monitoring ports are in a one-to-one correspondence with feeder fibers or branch fibers, after a pulse optical signal sent by an OTDR enters an optical fiber through the monitoring ports, a returned reflected optical signal is enabled to pass through only one optical fiber, to avoid a problem caused by superimposition of reflected optical signals, so that an ODN event is identified more accurately, and optical fiber fault detection is more accurate.

According to a first aspect, at least one embodiment of this application provides an optical splitting apparatus. The optical splitting apparatus includes a first optical splitting unit, a first optical path processing unit, and a second optical path processing unit, where there are a plurality of first optical path processing units. The first optical splitting unit includes a first port and a plurality of second ports. The first port is separately connected to the plurality of second ports, the first port is connected to a feeder fiber through the second optical path processing unit, and any second port in the plurality of second ports is connected to a branch fiber through the first optical path processing unit, in other words, there are a plurality of branch fibers, and each branch fiber is connected to a second port. The first optical path processing unit includes a third port, a fourth port, and a fifth port. The fifth port is separately connected to the third port and the fourth port. The second optical path processing unit includes a sixth port, a seventh port, and an eighth port. The sixth port is separately connected to the seventh port and the eighth port.

The third port of each first optical path processing unit is connected to the second port through a first optical fiber, the fourth port is connected to a second optical fiber, the fifth port is connected to the branch fiber, and second optical fibers connected to fourth ports of any two first optical path processing units in the plurality of first optical path processing units are different. The first optical path processing unit transmits a first pulse optical signal from the second optical fiber to the branch fiber, and then transmits, to the second optical fiber, a first reflected optical signal that is generated through propagation of the first pulse optical signal and that is from the branch fiber. The first reflected optical signal is used for fault detection on the branch fiber.

The sixth port of each second optical path processing unit is connected to the feeder fiber, the seventh port is connected to the first port through a third optical fiber, and the eighth port is connected to a fourth optical fiber. The second optical path processing unit transmits a second pulse optical signal from the fourth optical fiber to the feeder fiber, and then transmits, to the fourth optical fiber, a second reflected optical signal that is generated through propagation of the second pulse optical signal and that is from the feeder fiber. The second reflected optical signal is used for fault detection on the feeder fiber.

The second optical fiber and the fourth optical fiber are used as monitoring ports of the optical splitting apparatus, to help implement optical fiber fault detection and other monitoring requirements of the optical splitting apparatus.

In the optical splitting apparatus of the foregoing structure, the sixth port of the second optical path processing unit is configured to connect to the feeder fiber and corresponds to a feeder optical path; and the fifth port of the first optical path processing unit is configured to connect to the branch fiber and corresponds to a branch optical path. The optical splitting apparatus provided in this application is used in a PON network. During the optical fiber fault detection, a pulse optical signal sent by an OTDR enters the feeder fiber through the fourth optical fiber or enters a branch fiber through the second optical fiber, and a reflected optical signal generated in the feeder fiber or the branch fiber is returned to the OTDR through the fourth optical fiber or the second optical fiber, to implement the optical fiber fault detection. In the foregoing detection process, the pulse optical signal does not pass through the first optical splitting unit, but enters only the feeder fiber or the branch fiber. Therefore, the reflected optical signal returned to the OTDR is only a reflected optical signal generated in one optical fiber, and reflected optical signals are not superimposed, so that the ODN event is identified more accurately, and the optical fiber fault detection is more accurate.

In embodiments of this disclosure, the first optical path processing unit and the second optical path processing unit are implemented through a beam splitting device.

For example, the first optical splitting unit is a 1×N beam splitter, and both the first optical path processing unit and the second optical path processing unit are 1x2 beam splitters. The third port and the fourth port of the first optical path processing unit are two branch ports of the first optical path processing unit, the seventh port and the eighth port of the second optical path processing unit are two branch ports of the second optical path processing unit, and branch ports of the beam splitter are not connected. Therefore, the third port and the fourth port are not connected, and the seventh port and the eighth port are not connected.

For example, at least one of the first optical path processing unit and the second optical path processing unit is an uneven beam splitter; and a split ratio of the fourth port is less than a split ratio of the third port; or a split ratio of the eighth port is less than a split ratio of the seventh port.

Because the fourth port and the eighth port are mainly used for the optical fiber fault detection, strength of an optical signal used for the optical fiber fault detection may be lower than strength of an optical signal used for information transmission. In this way, on the premise that optical fiber fault detection can be performed normally, interference caused by the optical signal used for the optical fiber fault detection to the optical signal used for the information transmission is avoided.

It is clearly that, in addition to performing interference control based on the strength of the optical signal, the optical signal used for the optical fiber fault detection and the optical signal used for the information transmission include different wavelengths, to ensure that the optical signal used for the information transmission can be correctly received and parsed, so that correct information transmission is ensured.

For example, the first optical splitting unit is an even beam splitter.

For example, both the first optical path processing unit and the second optical path processing unit are uneven beam splitters.

For example, split ratios of the first optical path processing unit and the second optical path processing unit are both 1:9.

When the optical splitting apparatus includes only the first optical splitting unit, the first optical path processing unit, and the second optical path processing unit, the optical splitting apparatus is connected to only one feeder fiber, and corresponds to one feeder optical path. However, in some cases, two feeder fibers are required in a PON. In this case, the optical splitting apparatus further includes a second optical splitting unit, where the sixth port is connected to two feeder fibers, which are operated in primary/secondary mode, through the second optical splitting unit, and only one feeder fiber in the two feeder fibers is used at a time.

The second optical splitting unit includes a ninth port, a tenth port, and an eleventh port, where the eleventh port is separately connected to the ninth port and the tenth port; and the ninth port is connected to one feeder fiber in the two feeder fibers, the tenth port is connected to the other feeder fiber in the two feeder fibers, and a fifth output port is connected to a fourth input port through a fifth optical fiber.

For example, the second optical splitting unit is a 5:5 beam splitter.

According to a second aspect, at least one embodiment of this application provides an optical splitting system, where the optical splitting system includes an optical splitting apparatus and an optical-layer monitoring apparatus, the optical splitting apparatus is the optical splitting apparatus according to the first aspect; and the optical-layer monitoring apparatus is connected to a second optical fiber and a fourth optical fiber.

The optical-layer monitoring apparatus transmits a first pulse optical signal to one second optical fiber in a plurality of second optical fibers, receives a first reflected optical signal from the second optical fiber, and performs fault detection on a branch fiber based on the first reflected optical signal; or transmits a second pulse optical signal to the fourth optical fiber, receives a second reflected optical signal from the fourth optical fiber, and performs fault detection on a feeder fiber based on the second reflected optical signal.

For example, the optical-layer monitoring apparatus includes an optical time domain reflectometer, an optical switch, and a control module. The optical switch is connected between the optical splitting apparatus and the optical time domain reflectometer, and the control module is connected to a control end of the optical switch.

The optical time domain reflectometer is responsible for transmiting a pulse optical signal, receiving a reflected optical signal, and performing optical fiber fault detection based on the reflected optical signal; and the control module is responsible for controlling the optical switch to connect the second optical fiber or the fourth optical fiber to the optical time domain reflectometer.

For example, the control module is an ONT, and is referred to as a control ONT.

For example, the optical time domain reflectometer includes a light source, a photoelectric detector, and a circulator. The circulator includes a twelfth port, a thirteenth port, and a fourteenth port, where the twelfth port is connected to the light source, the thirteenth port is connected to the optical switch, and the fourteenth port is connected to the photoelectric detector.

The circulator transmits the pulse optical signal received from the twelfth port out from the thirteenth port, and transmits the first reflected optical signal or the second reflected optical signal received from the thirteenth port out from the fourteenth port. In this way, the pulse optical signal emitted from the light source can be successfully sent to an optical fiber, and the reflected optical signal returned from the optical fiber can be successfully sent to the photoelectric detector. The photoelectric detector converts the reflected optical signal into an electrical signal, where the electrical signal is for generating an optical time domain reflectometer test curve.

For example, the light source is a distributed feedback laser (distributed feedback laser, DFB), and the photoelectric detector is an avalanche photon diode (avalanche photon diode, APD).

Optionally, the optical time domain reflectometer further includes two auxiliary photoelectric detectors and two semi-transmissive semi-reflective lenses. The two semi-transmissive semi-reflective lenses are disposed between the optical switch and the circulator in sequence. A part of an optical signal output by the optical switch enters the circulator through the two semi-transmissive semi-reflective lenses in sequence. The other part of the optical signal is reflected when passing through the two semi-transmissive semi-reflective lenses, and then separately enters the two auxiliary photoelectric detectors to detect the optical signal.

Optionally, the optical-layer monitoring apparatus further includes a third optical splitting unit. The third optical splitting unit includes a fifteenth port, a sixteenth port, and a seventeenth port, where the fifteenth port is separately connected to the sixteenth port and the seventeenth port. The fifteenth port is connected to the fourth optical fiber, the sixteenth port is connected to the optical switch through a sixth optical fiber, and the seventeenth port is connected to the control module through a seventh optical fiber.

The third optical splitting unit can transmit, to the control module and the optical time domain reflectometer at the same time, a signal transmitted by the feeder fiber connected to the optical splitting apparatus, so that the control module can receive control instructions delivered by an entire passive optical network, and perform an operation corresponding to the control instructions.

For example, the third optical splitting unit is a 5:5 beam splitter.

According to a third aspect, at least one embodiment of this application provides a passive optical network, where the passive optical network includes an optical line termination, an optical network terminal, and an optical splitting system. The optical splitting system is the optical splitting system according to the second aspect, and the optical splitting system is separately connected to the optical line termination and the optical line termination.

The optical splitting system is connected to the optical line termination through an optical fiber, and the optical splitting system is connected to the optical line termination through an optical fiber. The optical fiber between the optical splitting system and the optical line termination is a feeder fiber, and the optical fiber between the optical splitting system and the optical line termination is a branch fiber.

By using the optical splitting system of the foregoing structure in the passive optical network, optical fiber fault detection is facilitated, and the passive optical network can further perform port binding and rogue detection processes more easily.

For example, each component in the passive optical network implements the port binding in the following manner:
The optical splitting system determines, by polling a plurality of first optical path processing units, a port number of a second port on which an upstream optical signal exists, and uploads the port number of the second port to an optical line termination; and
the optical line termination receives the upstream optical signal, and binds the optical network terminal transmiting the upstream optical signal with the port number of the corresponding second port.

For another example, each component in the passive optical network implements the rogue detection in the following manner:
In response to alarm instructions, the optical splitting system determines, by polling the plurality of first optical path processing units, the port number of the second port on which the upstream optical signal exists, and uploads the port number of the second port to the optical line termination; and
the optical line termination determines that an optical network terminal corresponding to the port number of the second port is an optical network terminal that emits light abnormally.

According to a fourth aspect, at least one embodiment of this application provides an optical fiber fault detection method, where the method is applied to the optical splitting system according to the second aspect, and the method includes:
An optical-layer monitoring apparatus transmits a first pulse optical signal to one second optical fiber in a plurality of second optical fibers, or transmits a second pulse optical signal to a fourth optical fiber. The plurality of second optical fibers are connected to a plurality of branch fibers respectively through a plurality of first optical path processing units, the fourth optical fiber is connected to a feeder fiber through a second optical path processing unit, the plurality of branch fibers are further connected to a plurality of second ports of a first optical splitting unit respectively through the plurality of first optical path processing units, the feeder fiber is further connected to a first port of the first optical splitting unit through the second optical path processing unit, and the first port is separately connected to the plurality of second ports.

The optical-layer monitoring apparatus receives a first reflected optical signal from the second optical fiber, or receives a second reflected optical signal from the fourth optical fiber.

The optical-layer monitoring apparatus performs fault detection on the branch fiber based on the first reflected optical signal, or performs fault detection on the feeder fiber based on the second reflected optical signal.

Optionally, the method further includes:
The optical-layer monitoring apparatus determines, by polling the plurality of first optical path processing units, a port number of a second port on which an upstream optical signal exists; and
the optical-layer monitoring apparatus uploads the port number of the second port to an optical line termination, where the optical line termination is configured to bind an optical network terminal transmiting the upstream optical signal with a corresponding branch port number.

Optionally, the method further includes:
In response to occurred alarm instructions, the optical-layer monitoring apparatus determines, by polling the plurality of first optical path processing units, the port number of the second port on which the upstream optical signal exists, where the alarm instructions are for prompting that an optical network terminal that emits light abnormally exists, the emitting light abnormally herein refers to that the optical network terminal emits light by itself when no upstream bandwidth is allocated, and such an optical network terminal is a rogue optical network terminal; and
the optical-layer monitoring apparatus uploads the port number of the second port to the optical line termination, where the optical line termination is configured to determine that an optical network terminal corresponding to the port number of the second port is the optical network terminal that emits light abnormally.

### BRIEF DESCRIPTION OF DRAWINGS

FIG. 1 is a schematic diagram of an optical path during optical fiber fault detection in a related technology;
FIG. 2 is a schematic diagram of a structure of an optical splitting apparatus according to an embodiment of this application;
FIG. 3 is a schematic diagram of a structure of an optical splitting apparatus according to an embodiment of this application;
FIG. 4 is a schematic diagram of a structure of an optical splitting system according to an embodiment of this application;
FIG. 5 is a schematic diagram of a structure of a passive optical network according to an embodiment of this application; and
FIG. 6 is a flowchart of an optical fiber fault detection method according to an embodiment of this application.

### DESCRIPTION OF EMBODIMENTS

To make the objectives, technical solutions, and advantages of this application clearer, the following further describes implementations of this application in detail with reference to the accompanying drawings.

Unless otherwise defined, a technical term or a scientific term used in this application should have a general meaning understood by a person of ordinary skill in the art of this application. Terms "first", "second", and "third", and similar expressions used in the specification and claims of this application do not indicate any order, quantity, or importance, but are merely intended to distinguish between different components. Likewise, "a/an", "one", or the like is not intended to indicate a quantity limitation either, but is intended to indicate existing at least one. Terms such as "include" or "comprise" mean that elements or objects appearing before "include" or "comprise" now cover elements or objects listed after "include" or "comprise" and their equivalents, and other elements or objects are not excluded. "Connection", "link", or the like is not limited to an electrical connection, but may include a physical or mechanical connection, whether directly or indirectly.

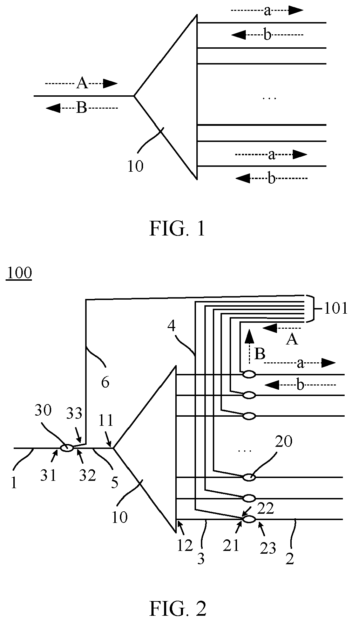

FIG. 1 is a schematic diagram of an optical path during optical fiber fault detection in a related technology. Refer to FIG. 1. A pulse optical signal A sent by an OTDR enters a plurality of branch fibers through a first optical splitting unit 10. In each branch fiber, a branch pulse optical signal a is propagated, and the branch pulse optical signal a is propagated and reflected in the branch fiber to form a branch reflected optical signal b. A plurality of branch reflected optical signals b are combined into one reflected optical signal B through the first optical splitting unit 10 and then enter a feeder fiber. The reflected optical signal B is formed by superimposing a plurality of branch reflected optical signals, and consequently, an ODN event identified by the OTDR from the reflected optical signals is inaccurate, and the optical fiber fault detection cannot be accurately implemented.

FIG. 2 is a schematic diagram of a structure of an optical splitting apparatus according to an embodiment of this application. Refer to FIG. 2. The optical splitting apparatus 100 includes a plurality of monitoring ports 101.

The optical splitting apparatus 100 includes a first optical splitting unit 10, a plurality of first optical path processing units 20, and a second optical path processing unit 30. The first optical splitting unit 10 includes a first port 11 and a plurality of second ports 12, where the first port 11 is separately connected to the plurality of second ports 12, the first port 11 is connected to a feeder fiber 1 through the second optical path processing unit 30, and any second port 12 in the plurality of second ports 12 is connected to a branch fiber 2 through a first optical path processing unit 20. As shown in FIG. 2, the optical splitting apparatus includes a plurality of branch fibers 2, where each branch fiber 2 is connected to a second port 12 through a first optical path processing unit 20, and the branch fiber 2, the first optical path processing unit 20, and the second port 12 are in a one-to-one correspondence.

The first optical path processing unit 20 includes a third port 22, a fourth port 22, and a fifth port 23, where the fifth port 23 is separately connected to the third port 21 and the fourth port 22. The third port 21 is connected to the second port 12 through a first optical fiber 3, the fourth port 22 is connected to a second optical fiber 4, and the fifth port 23 is connected to the branch fiber 2; and the first optical path processing unit 20 is configured to: transmit a first pulse optical signal from the second optical fiber 4 to the branch fiber 2, and transmit, to the second optical fiber 4, a first reflected optical signal that is generated through propagation of the first pulse optical signal and that is from the branch fiber 2, where the first reflected optical signal is used for fault detection on the branch fiber 2.

The second optical path processing unit 30 includes a sixth port 31, a seventh port 32, and an eighth port 33, where the sixth port 31 is separately connected to the seventh port 32 and the eighth port 33. The sixth port 31 is connected to the feeder fiber 1, the seventh port 32 is connected to the first port 11 through a third optical fiber 5, and the eighth port 33 is connected to a fourth optical fiber 6; and the second optical path processing unit 30 is configured to: transmit a second pulse optical signal from the fourth optical fiber 6 to the feeder fiber 1, and transmit, to the fourth optical fiber 6, a second reflected optical signal that is generated through propagation of the second pulse optical signal and that is from the feeder fiber 1, where the second reflected optical signal is used for fault detection on the feeder fiber 1.

Input ends of the second optical fiber 4 and the fourth optical fiber 6 are the monitoring port 101 of the optical splitting apparatus, and are configured to implement optical fiber fault detection and other monitoring requirements of the optical splitting apparatus.

Fault detection of a branch fiber is used as an example. As shown in FIG. 2, a pulse optical signal A sent by an OTDR passes through the second optical fiber 4 and the first optical path processing unit 20 and becomes a pulse optical signal a, the pulse optical signal a enters a branch fiber and is propagated and reflected to form a reflected optical signal b, the reflected optical signal b passes through the first optical path processing unit 2 and becomes a reflected optical signal B, and the reflected optical signal B returns to the OTDR through the second optical fiber 4. The reflected optical signal B herein is obtained only from a reflected optical signal b in a branch fiber. The reflected optical signal B does not pass through the first optical splitting unit 10, and does not involve a superimposition of reflected optical signals.

In the optical splitting apparatus 100 of the foregoing structure, the sixth port 31 of the second optical path processing unit 30 is configured to connect to a feeder fiber and corresponds to a feeder optical path; and the fifth port 22 of the plurality of first optical path processing units 20 is configured to connect to a branch fiber and corresponds to a branch optical path. The optical splitting apparatus 100 provided in this application is used in a PON network. During the optical fiber fault detection, a pulse optical signal sent by an OTDR enters a feeder fiber through a fourth optical fiber or enters a branch fiber through a second optical fiber, and a reflected optical signal generated in the feeder fiber or a branch fiber is returned to the OTDR through the fourth optical fiber or the second optical fiber, to implement the optical fiber fault detection. In the foregoing detection process, the pulse optical signal does not pass through a first optical splitting unit, but enters only the feeder fiber or a branch fiber. Therefore, the reflected optical signal returned to the OTDR is a reflected optical signal generated in only one optical fiber, and reflected optical signals are not superimposed, so that an ODN event is identified more accurately, and the optical fiber fault detection is more accurate. In addition, when the optical splitting apparatus is used for networking, the pulse optical signal can be coupled to the optical fiber through a beam splitter, and an optical multiplexer is not required to perform multiplexing, and costs are low.

In the optical splitting apparatus 100, the first optical splitting unit 10 is a 1×N beam splitter, and both the first optical path processing unit 20 and the second optical path processing unit 30 are 1x2 beam splitters. Each port of the first optical splitting unit 10 is corresponding to one monitoring port, and the optical splitting apparatus includes N+1 monitoring ports. The third port 21 and the fourth port 22 of the first optical path processing unit 20 are two branch ports of the first optical path processing unit 20, and the seventh port 32 and the eighth port 33 of the second optical path processing unit 30 are two branch ports of the second optical path processing unit 30.

For example, at least one of the first optical path processing unit 20 and the second optical path processing unit 30 is an uneven beam splitter; for example, in the first optical path processing unit 20, a split ratio of the fourth port 22 is less than a split ratio of the third port 21; and in the second optical path processing unit 30, a split ratio of the eighth port 33 is less than a split ratio of the seventh port 32. Because the monitoring port 101 is mainly used to perform the optical fiber fault detection, strength of an optical signal used for the optical fiber fault detection may be lower than strength of an optical signal used for information transmission. In this way, on the premise that optical fiber fault detection can be performed normally, interference caused by the optical signal used for the optical fiber fault detection to the optical signal used for information transmission is avoided.

It is clearly that, in addition to performing interference control based on the strength of the optical signal, the optical signal used for the optical fiber fault detection and the optical signal used for the information transmission include different wavelengths, to ensure that the optical signal used for the information transmission can be correctly received and parsed, so that correct information transmission is ensured.

For example, the first optical splitting unit 10 is an even beam splitter.

For example, both the first optical path processing unit 20 and the second optical path processing unit 30 are uneven beam splitters.

For example, split ratios of the first optical path processing unit 20 and the second optical path processing unit 30 are both 1:9, to be specific, each of the first optical path processing unit 20 and the second optical path processing unit 30 includes a 90% branch and a 10% branch.

A 1:9 uneven beam splitter (the second optical path processing unit 30) is disposed on the feeder fiber. 90% of light of an optical signal passing through the feeder fiber is input to the 1×N beam splitter through the 90% branch, and 10% of light is input to the 1×N beam splitter through the 10% branch (the monitoring ports). A 1:9 uneven beam splitter (the first optical path processing unit 20) is disposed on the branch fiber. 90% of light of an optical signal passing through the branch fiber is input to the 1×N beam splitter through the 90% branch, and 10% of light is input to the 1×N beam splitter through the 10% branch (the monitoring ports). The 10% branch may not only couple the pulse optical signal of the OTDR into a PON normal optical signal, to implement fault detection, but also monitor a normal optical signal that passes through the uneven beam splitter.

When the optical splitting apparatus 100 includes only the first optical splitting unit 10, the first optical path processing unit 20, and the second optical path processing unit 30, the optical splitting apparatus 100 is connected to only one feeder fiber, and corresponds to one feeder optical path. However, in some cases, two feeder fibers are required in a PON, and the two feeder fibers which are operated in an active/standby mode.

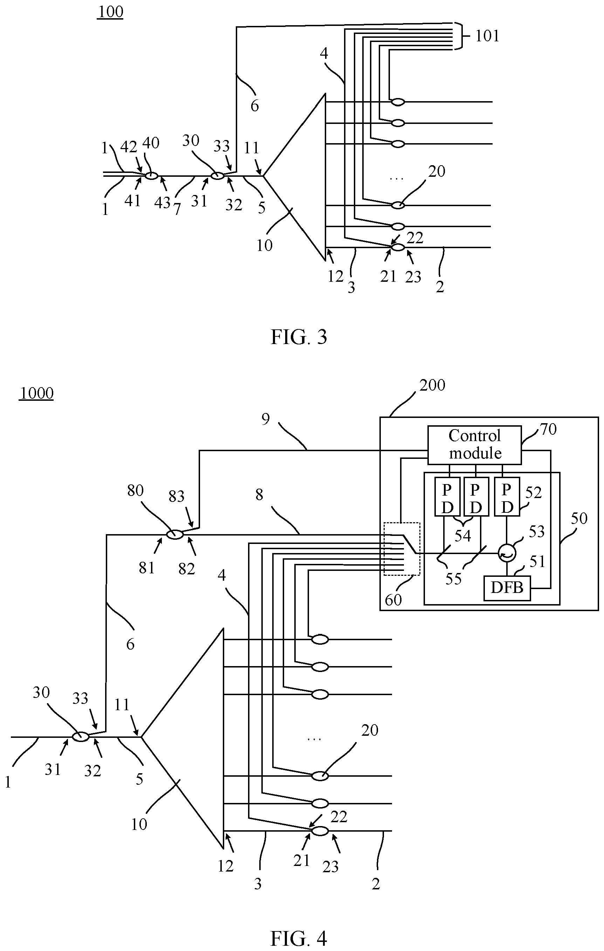

FIG. 3 is a schematic diagram of a structure of another optical splitting apparatus according to an embodiment of this application. Refer to FIG. 3. In comparison with the optical splitting apparatus shown in FIG. 2, the optical splitting apparatus 100 further includes a second optical splitting unit 40, where a sixth port 31 is connected, through the second optical splitting unit 40, to two feeder fibers 1 which are operated in an active/standby mode.

The second optical splitting unit 40 includes a ninth port 41, a tenth port 42, and an eleventh port 43, where the eleventh port 43 is separately connected to the ninth port 41 and the tenth port 42; and the ninth port 41 is connected to one feeder fiber 1 in the two feeder fibers 1, the tenth port 42 is connected to the other feeder fiber 1 in the two feeder fibers 1, and the eleventh port 43 is connected to the sixth port 31 through a fifth optical fiber 7. In this case, the two feeder fibers are respectively connected to the ninth port 41 and the tenth port 42. When the optical splitting apparatus works, only one of the two feeder fibers is effective.

For example, the first optical path processing unit 40 is a 5:5 beam splitter.

In the structures shown in FIG. 2 and FIG. 3, a case in which the optical splitting apparatus includes one beam splitter is shown. In another embodiment, the optical splitting apparatus includes a plurality of beam splitters, the plurality of beam splitters are divided into a plurality of levels, a first optical path processing unit is disposed on a branch fiber of each beam splitter, and a second optical path processing unit is disposed on a feeder fiber of each beam splitter; or a first optical path processing unit is disposed on a branch fiber of a last-level beam splitter of a plurality of levels of beam splitters, and a second optical path processing unit is disposed on a feeder fiber of each beam splitter, to implement fault detection on each optical fiber in the optical splitting apparatus in the foregoing design.

FIG. 4 is a schematic diagram of a structure of an optical splitting system according to an embodiment of this application. Refer to FIG. 4. The optical splitting system 1000 includes an optical splitting apparatus 100 and an optical-layer monitoring apparatus 200, where the optical splitting apparatus 100 is the optical splitting apparatus 100 shown in FIG. 2 or FIG. 3. That the optical splitting apparatus 100 in FIG. 4 is the optical splitting apparatus in FIG. 2 is used as an example; and the optical-layer monitoring apparatus 200 is connected to a second optical fiber 4 and a fourth optical fiber 6.

The optical-layer monitoring apparatus 200 transmits a first pulse optical signal to the second optical fiber 4, receives a first reflected optical signal from the second optical fiber 4, and performs fault detection on a branch fiber 2 based on the first reflected optical signal; or transmits a second pulse optical signal to the fourth optical fiber 6, receives a second reflected optical signal from the fourth optical fiber 6, and performs fault detection on a feeder fiber 1 based on the second reflected optical signal.

For example, the optical-layer monitoring apparatus 200 includes an optical time domain reflectometer 50, an optical switch 60, and a control module 70. The optical switch 60 is connected between a plurality of monitoring ports 101 of the optical splitting apparatus 100 and the optical time domain reflectometer 50, and the control module 70 is connected to a control end of the optical switch 60.

The optical time domain reflectometer 50 is responsible for transmiting the first pulse optical signal, receiving the first reflected optical signal, and performing the fault detection on the branch fiber 2 based on the first reflected optical signal; or transmiting the second pulse optical signal, receiving the second reflected optical signal, and performing the fault detection on the feeder fiber 1 based on the second reflected optical signal; and the control module 70 is responsible for controlling the optical switch 60, to connect one monitoring port 101 in the plurality of monitoring ports 101 to the optical time domain reflectometer 50, in other words, connect the second optical fiber 4 or the fourth optical fiber 6 to the optical time domain reflectometer 50.

For example, the control module 70 is an ONT, and is referred to as a control ONT.

For example, the optical time domain reflectometer 50 includes a light source 51, a photoelectric detector 52, and a circulator 53. The circulator 53 includes a twelfth port, a thirteenth port, and a fourteenth port, where the twelfth port is connected to the light source 51, the thirteenth port is connected to the optical switch 60, and the fourteenth port is connected to the photoelectric detector 52.

The light source 51 generates a pulse optical signal, and the circulator 53 transmits the pulse optical signal received from the twelfth port out from the thirteenth port, and transmits a reflected optical signal (the first reflected optical signal or the second reflected optical signal) received from the thirteenth port out from the fourteenth port. In this way, the pulse optical signal emitted from the light source 51 can be successfully sent to an optical fiber, and a reflected optical signal returned from the optical fiber can be successfully sent to the photoelectric detector 52. The photoelectric detector 52 converts the reflected optical signal into an electrical signal, where the electrical signal is for generating an optical time domain reflectometer test curve, and the reflectometer test curve is for performing event detection, diagnosis, and location of the optical fiber, that is, fault detection.

In this embodiment of this application, the pulse optical signal generated from the light source 51 enters one second optical fiber 4 and becomes the first pulse optical signal, the pulse optical signal generated from the light source 51 enters the fourth optical fiber 6 and becomes the second pulse optical signal, and the pulse optical signal generated from the light source 51 enters only one second optical fiber 4 or one fourth optical fiber 6 at a time. The control module 70 controls the optical switch to connect to an optical fiber that the pulse optical signal generated from the light source 51 enters.

For example, the light source 51 is a distributed feedback laser (distributed feedback laser, DFB), and the photoelectric detector 52 is a photodetection diode (photo diode, PD), for example, an avalanche photon diode (avalanche photon diode, APD).

Optionally, the optical time domain reflectometer 50 further includes two auxiliary photoelectric detectors 54 and two semi-transmissive semi-reflective lenses 55. The two semi-transmissive semi-reflective lenses 55 are disposed between the optical switch 60 and the circulator 53 in sequence. A part of an optical signal output by the optical switch 60 enters the circulator 53 through the two semi-transmissive semi-reflective lenses 55 in sequence. The other part of the optical signal is reflected when passing through the two semi-transmissive semi-reflective lenses 55, and then separately enters the two auxiliary photoelectric detectors 56 to detect the optical signal.

For example, an auxiliary photoelectric detector is a PD, and the two auxiliary photoelectric detectors are PDs of different models. By disposing the two auxiliary photoelectric detectors, the optical splitting system cannot only perform optical fiber fault detection, but also perform processes such as port binding and rogue detection. In the port binding and rogue detection processes, the auxiliary photoelectric detector is configured to detect whether an upstream optical signal exists on a branch port corresponding to the optical splitting system.

For example, one of the two auxiliary photoelectric detectors is a 1310 PD, and the other is a 1270 PD, which are respectively for detecting light of 1310 nm and 1270 nm, where the two wavelengths are two common wavelengths in a PON system.

For example, the control module 70 controls the optical switch to connect all monitoring ports 101 in sequence. Each time a monitoring port 101 is connected, both the two auxiliary photoelectric detectors 54 detect the optical signal. If the optical signal is detected, it indicates that the upstream optical signal exists on the branch fiber corresponding to the monitoring port, and the port binding or the rogue detection is implemented based on a detection result.

Optionally, the optical-layer monitoring apparatus 200 further includes a third optical splitting unit 80, where the third optical splitting unit 80 includes a fifteenth port 81, a sixteenth port 82, and a seventeenth port 83, and the fifteenth port 81 is separately connected to the sixteenth port 82 and the seventeenth port 83. The fifteenth port 81 is connected to the fourth optical fiber 6, the sixteenth port 82 is connected to the optical switch 60 through a sixth optical fiber 8, and the seventeenth port 83 is connected to the control module 70 through a seventh optical fiber 9.

The third optical splitting unit 80 transmits, to the control module 70 and the optical time domain reflectometer 50 at the same time, a signal of a feeder fiber connected to the optical splitting apparatus 100, so that the control module 70 can receive control instructions delivered by an entire passive optical network, and perform an operation corresponding to the control instructions.

For example, the control instructions herein include but are not limited to instructions for performing operations such as the optical fiber fault detection, the port binding, and the rogue detection.

For example, the third optical splitting unit 80 is a 5:5 beam splitter.

In the optical splitting system, the optical splitting apparatus 100 is a passive device and does not need to be powered. However, the optical-layer monitoring apparatus 200 is an active device and needs to be powered. The optical-layer monitoring apparatus 200 may be powered remotely by an optical line termination at a central office, or powered locally.

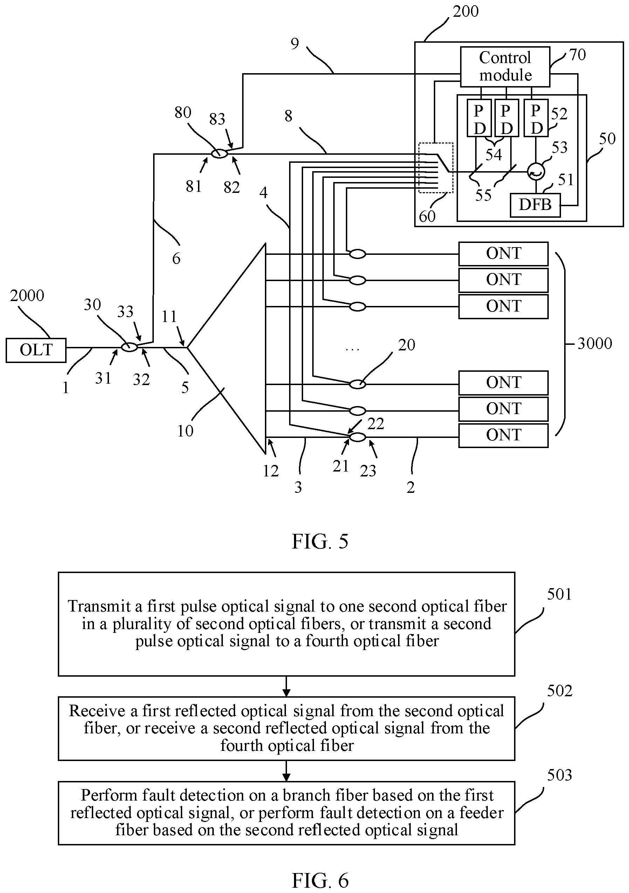

FIG. 5 is a schematic diagram of a structure of a passive optical network according to an embodiment of this application. Refer to FIG. 5. The passive optical network includes an optical line termination 2000, an optical network terminal 3000, and an optical splitting system 1000. The optical splitting system 1000 is the optical splitting system 1000 shown in FIG. 4, namely, an optical splitting system including an optical-layer monitoring function. The optical splitting system 1000 is separately connected to the optical line termination 2000 and the optical line termination 2000.

The optical splitting system 1000 is connected to the optical line termination 2000, and the optical splitting system 1000 is connected to the optical line termination 2000 through an optical fiber. The optical fiber between the optical splitting system 1000 and the optical line termination 2000 is a feeder fiber, and the optical fiber between the optical splitting system 1000 and the optical line termination 2000 is a branch fiber.

By using the optical splitting system 1000 of the foregoing structure in the passive optical network, optical fiber fault detection is facilitated, and the passive optical network can further perform port binding and rogue detection processes more easily.

For example, each component in the passive optical network implements the port binding in the following manner:
The optical splitting system 1000 determines, by polling a plurality of first optical path processing units 20, a port number of a second port on which an upstream optical signal exists, and uploads the port number of the second port to the optical line termination 2000; and the polling herein means that the optical switch is connected to a plurality of second optical fibers 4 in sequence, an auxiliary photoelectric detector is for checking whether each branch fiber includes the upstream optical signal, and one of the second optical fibers 4 is connected each time; and
the optical line termination 2000 receives the upstream optical signal, and binds the optical network terminal 3000 transmiting the upstream optical signal with the port number of the corresponding second port.

In the passive optical network, an optical network terminal and a branch port number are bound. When the optical network terminal goes offline, a system can determine which branch ports are idle in time. In this case, the system may notify a staff member to remove an optical fiber connected to the branch port, so that the branch port can be connected to a new optical network terminal, to ensure full use of the branch port.

After the optical network terminal goes offline, the optical line termination 2000 further deregisters a binding relationship between the optical network terminal and the branch port number. Correspondingly, when a new optical network terminal goes online, the optical line termination 2000 registers a binding relationship between the new optical network terminal and the branch port number for the new optical network terminal. Herein, going online means that the optical network terminal is just powered on, or is registered and goes offline when being reset and restarted due to a fault, and going offline means that the optical network terminal is powered off or goes offline due to a fault.

Before the port binding, the optical line termination 2000 first transmits silence instructions to all optical network terminals connected to the branch ports, to command all the optical network terminals to stop transmiting the upstream optical signal. Then, an upstream bandwidth (upstream slot) is allocated to a first optical network terminal, so that the first optical network terminal emits light, and instructions for allocating the upstream bandwidth to the first optical network terminal carries an identifier (for example, ONT#1) of the first optical network terminal, where the first optical network terminal herein is any optical network terminal in the passive optical network. In addition, the optical line termination 2000 notifies a control module in the optical splitting system 1000, so that the control module controls the optical switch to perform polling and detection, and determines which branch fiber includes the upstream optical signal.

During a port binding process, the control module performs polling and detection based on the notification of the optical line termination. After a time-out (Time Out), the optical line termination 2000 notifies the first optical network terminal to stop emitting light; and then, the optical line termination 2000 allocates an upstream bandwidth to the control module, so that the control module reports a detected branch port number, and instructions for allocating the upstream bandwidth to the optical line termination carries an identifier of the optical line termination. Then, the optical line termination 2000 may complete the port binding. It is clearly that, the port binding may also be performed by a network management system (for example, a network cloud engine fixed access network system (network cloud engine fixed access network, NCE-FAN)).

The time-out herein is greater than maximum polling time, where the maximum polling time is time required for polling from the 1^{st} fourth port to the last fourth port.

According to the foregoing process, the optical line termination 2000 may bind all optical network terminals in the passive optical network in sequence, and when a new optical network terminal accesses a network, the port binding is also performed in this manner.

For another example, each component in the passive optical network implements the rogue detection in the following manner:
In response to alarm instructions, the optical splitting system 1000 determines, by polling the plurality of first optical path processing units 20, the port number of the second port on which the upstream optical signal exists, and uploads the port number of the second port to the optical line termination 2000, where the alarm instructions are for prompting that an optical network terminal that emits light abnormally exists; and
the optical line termination 2000 determines that an optical network terminal 3000 corresponding to the port number of the second port is the optical network terminal that emits light abnormally. The optical network terminal that emits light abnormally is an optical network terminal that transmits an upstream optical signal when no upstream bandwidth is allocated.

A process of generating the alarm instructions is as follows: The optical line termination 2000 transmits the silence instructions to all the optical network terminals connected to the branch ports, to command all the optical network terminals to stop transmiting the upstream optical signal. Because the optical splitting system also receives the instructions, the optical splitting system monitors the branch ports. The optical splitting system 1000 connects all second optical fibers to the optical switch at the same time, and determines whether the upstream optical signal exists; or the optical splitting system determines, in this case, in a polling manner, whether each branch fiber includes the upstream optical signal in sequence; and if detecting the upstream optical signal, generates the alarm instructions, and performs the foregoing rogue detection action. If no upstream optical signal is detected, the detection process ends.

After a rogue optical line termination is determined, the optical line termination 2000 transmits power-off instructions to the optical network terminal that emits light abnormally, to power off the optical network terminal. In the passive optical network, an optical network terminal is usually powered by a power over ethernet (power over ethernet, POE) power supply module.

In this embodiment of this application, the optical splitting system 1000 may perform the optical fiber fault detection and/or the rogue detection in response to a request of the optical line termination 2000; or the optical splitting system may periodically perform the optical fiber fault detection and/or the rogue detection.

The passive optical network in this embodiment of this application is a point to multiple point (point to multiple point, P2MP) passive optical network. The P2MP PON network includes a PON system based on an optical power splitter (power splitter), such as a time division multiplexing technology (time division multiplexing, TDM) PON (such as GPON and 10G PON), and also includes a PON system based on a wavelength multiplexing/demultiplexing (wavelength multiplexing/demultiplexing), such as a wavelength division multiplexing (wavelength division multiplexing, WDM) PON.

FIG. 6 is a flowchart of an optical fiber fault detection method according to an embodiment of this application. The method is applied to the optical splitting system shown in FIG. 4, and is executed by an optical-layer monitoring apparatus in the optical splitting system. Refer to FIG. 6. The method includes the following steps.

501: Transmit a first pulse optical signal to one second optical fiber in a plurality of second optical fibers, or transmit a second pulse optical signal to a fourth optical fiber.

In a possible implementation, fault detection is performed on branch fibers and a feeder fiber in sequence in the method.

Correspondingly, step 501 includes: A control module controls an optical time domain reflectometer to emit a pulse optical signal; and the control module controls an optical switch to connect a first monitoring port, so that the pulse optical signal enters a corresponding first optical fiber. When fault detection on the first optical fiber is completed, the control module controls the optical switch to connect to a second monitoring port, so that the pulse optical signal enters a corresponding second optical fiber. According to the foregoing method, the optical switch is controlled to connect all monitoring ports in sequence. The first optical fiber or the second optical fiber is any one of the feeder fiber or the plurality of branch fibers, and the first optical fiber and the second optical fiber are two different optical fibers in the plurality of branch fibers and the feeder fiber. The first monitoring port and the second monitoring port are two different monitoring ports in a plurality of monitoring ports.

502: Receive a first reflected optical signal from the second optical fiber, or receive a second reflected optical signal from the fourth optical fiber.

The pulse optical signal is sent by a light source in the optical time domain reflectometer, passes through a circulator, the optical switch, and an uneven beam splitter in sequence, and then is propagated in a corresponding optical fiber. When the pulse optical signal is propagated in the optical fiber, reflection occurs, and a reflected optical signal, namely, backward reflected light, is generated. Based on a principle of reversibility of light, the reflected optical signal is received by a photoelectric detector in the optical time domain reflectometer after passing through the uneven beam splitter, the optical switch, and the circulator.

503: Perform fault detection on the branch fiber based on the first reflected optical signal, or perform fault detection on the feeder fiber based on the second reflected optical signal.

The photoelectric detector generates an OTDR reflection curve based on the received reflected optical signal, and detects, diagnoses, and locates various events on the optical path based on the OTDR reflection curve. The events herein include but are not limited to a splice connector loss, an active connector, a bending loss, and the like.

Optionally, the method further includes:
determining, by polling a plurality of first optical path processing units, a port number of a second port on which an upstream optical signal exists; and
uploading the port number of the second port to an optical line termination, where the optical line termination is configured to bind the optical network terminal transmiting the upstream optical signal with the port number of the corresponding second port.

The polling herein means that the optical switch is connected to a plurality of second optical fibers 4 in sequence, an auxiliary photoelectric detector is used to check whether each branch fiber includes the upstream optical signal, and one of the second optical fibers 4 is connected each time.

For example, if either of two auxiliary photoelectric detectors detects an optical signal, it indicates that the upstream optical signal exists on the branch fiber connected to a currently connected second optical fiber 4. If neither of two auxiliary photoelectric detectors detects an optical signal, it indicates that no upstream optical signal exists on the branch fiber connected to a currently connected second optical fiber 4.

In a passive optical network, an optical network terminal and a branch port number are bound. When the optical network terminal goes offline, a system can determine which branch ports are idle in time. In this case, the system may notify a staff member to remove an optical fiber connected to the branch port, so that the branch port can be connected to a new optical network terminal, to ensure full use of the branch port.

After the optical network terminal goes offline, the optical line termination further deregisters a binding relationship between the optical network terminal and the branch port number. Correspondingly, when a new optical network terminal goes online, the optical line termination registers a binding relationship between the new optical network terminal and the branch port number for the new optical network terminal.

Before port binding, the optical line termination first transmits silence instructions to all optical network terminals connected to the branch ports, to command all the optical network terminals to stop transmiting the upstream optical signal. Then, an upstream bandwidth (upstream slot) is allocated to a first optical network terminal, so that the first optical network terminal emits light, where the first optical network terminal herein is any optical network terminal in the passive optical network. In addition, the optical line termination notifies a control module in the optical splitting system, so that the control module controls the optical switch to perform polling and detection, and determines which branch fiber includes the upstream optical signal.

During the port binding process, the control module performs polling detection based on the notification of the optical line termination. After a time-out, the optical line termination notifies the first optical network terminal to stop emitting light; and then, the optical line termination allocates an upstream bandwidth to the control module, so that the control module reports a detected branch port number. Then, the optical line termination may complete the port binding. It is clearly that, the port binding may also be performed by a network management system.

According to the foregoing process, the optical line termination may bind all optical network terminals in the passive optical network in sequence, and when a new optical network terminal accesses a network, the port binding is also performed in this manner.

Optionally, the method further includes:
in response to occurred alarm instructions, determining, by polling the plurality of first optical path processing units, the port number of the second port on which the upstream optical signal exists, where the alarm instructions are for prompting that an optical network terminal that emits light abnormally exists; and
uploading the port number of the second port to the optical line termination, where the optical line termination is configured to determine that an optical network terminal corresponding to the port number of the second port is the optical network terminal that emits light abnormally.

The process of generating the alarm instructions is as follows: The optical line termination transmits the silence instructions to all the optical network terminals connected to the branch ports, to command all the optical network terminals to stop transmiting the upstream optical signal. The optical splitting system connects all second optical fibers to the optical switch at the same time, and determines whether the upstream optical signal exists; or the optical splitting system determines, in this case, in a polling manner, whether each branch fiber includes the upstream optical signal in sequence; and if detecting the upstream optical signal, generates the alarm instructions, and performs the foregoing rogue detection action. If no upstream optical signal is detected, the detection process ends.

The foregoing descriptions are merely optional embodiments of this application, but the protection scope of this application is not limited thereto. Any variation or replacement readily figured out by a person skilled in the art within the technical scope disclosed in this application shall fall within the protection scope of this application. Therefore, the protection scope of this application shall be subject to the protection scope of the claims.

## Claims

1. An optical splitting apparatus, wherein the optical splitting apparatus (100) comprises: a first optical splitting unit (10), a plurality of first optical path processing units (20), and a second optical path processing unit (30);
the first optical splitting unit (10) comprises a first port (11) and a plurality of second ports (12), wherein the first port (11) is separately connected to the plurality of second ports (12), the first port (11) is connected to a feeder fiber (1) through the second optical path processing unit (30), and any second port (12) in the plurality of second ports (12) is connected to a branch fiber (2) through a first optical path processing unit (20);
the first optical path processing unit (20) comprises a third port (21), a fourth port (22), and a fifth port (23), wherein the fifth port (23) is separately connected to the third port (21) and the fourth port (22); the third port (21) is connected to the second port (12) through a first optical fiber (3), the fourth port (22) is connected to a second optical fiber (4), the fifth port (23) is connected to the branch fiber (2), wherein second optical fibers (4) connected to fourth ports (22) of any two first optical path processing units (20) in the plurality of first optical path processing units (20) are different; and the first optical path processing unit (20) is configured to: transmit a first pulse optical signal from the second optical fiber (4) to the branch fiber (2), and transmit, to the second optical fiber (4), a first reflected optical signal that is generated through propagation of the first pulse optical signal and that is from the branch fiber (2), wherein the first reflected optical signal is used for fault detection on the branch fiber (2); and
the second optical path processing unit (30) comprises a sixth port (31), a seventh port (32), and an eighth port (33), wherein the sixth port (31) is separately connected to the seventh port (32) and the eighth port (33); the sixth port (31) is connected to the feeder fiber (1), the seventh port (32) is connected to the first port (11) through a third optical fiber (5), and the eighth port (33) is connected to a fourth optical fiber (6); and the second optical path processing unit (30) is configured to: transmit a second pulse optical signal from the fourth optical fiber (6) to the feeder fiber (1), and transmit, to the fourth optical fiber (6), a second reflected optical signal that is generated through propagation of the second pulse optical signal and that is from the feeder fiber (1), wherein the second reflected optical signal is used for fault detection on the feeder fiber (1).

2. The optical splitting apparatus according to claim 1, wherein at least one of the first optical path processing unit (20) and the second optical path processing unit (30) is an uneven beam splitter; and
a split ratio of the fourth port (22) is less than a split ratio of the third port (21); or a split ratio of the eighth port (33) is less than a split ratio of the seventh port (32).

3. The optical splitting apparatus according to claim 1 or 2, wherein the optical splitting apparatus (100) further comprises a second optical splitting unit (40), wherein the sixth port (31) is connected to two feeder fibers (1), which are operated in an active/standby mode, through the second optical splitting unit (40); and
the second optical splitting unit (40) comprises a ninth port (41), a tenth port (42), and an eleventh port (43), wherein the eleventh port (43) is separately connected to the ninth port (41) and the tenth port (42); and the ninth port (41) is connected to one feeder fiber (1) in the two feeder fibers (1), the tenth port (42) is connected to the other feeder fiber (1) in the two feeder fibers (1), and the eleventh port (43) is connected to the sixth port (31) through a fifth optical fiber (7).

4. The optical splitting apparatus according to claim 2, wherein a split ratio of the uneven beam splitter is 1:9.

5. An optical splitting system, wherein the optical splitting system (1000) comprises the optical splitting apparatus (100) according to any one of claims 1 to 4 and an optical-layer monitoring apparatus (200); and
the optical-layer monitoring apparatus (200) is connected to the second optical fiber (4) and the fourth optical fiber (6), and is configured to: transmit a first pulse optical signal to the second optical fiber (4), receive a first reflected optical signal from the second optical fiber (4), and perform fault detection on the branch fiber (2) based on the first reflected optical signal; or transmit a second pulse optical signal to the fourth optical fiber (6), receive a second reflected optical signal from the fourth optical fiber (6), and perform fault detection on the feeder fiber (1) based on the second reflected optical signal.

6. The optical splitting system according to claim 5, wherein the optical-layer monitoring apparatus (200) comprises:
an optical time domain reflectometer (50), configured to: transmit the first pulse optical signal, receive the first reflected optical signal, and perform the fault detection on the branch fiber (2) based on the first reflected optical signal; or transmit the second pulse optical signal, receive the second reflected optical signal, and perform the fault detection on the feeder fiber (1) based on the second reflected optical signal;
an optical switch (60), connected between the optical splitting apparatus (100) and the optical time domain reflectometer (50); and
a control module (70), connected to a control end of the optical switch (60), and configured to control the optical switch (60) to connect the second optical fiber (4) or the fourth optical fiber (6) to the optical time domain reflectometer (50).

7. The optical splitting system according to claim 6, wherein the optical time domain reflectometer (50) comprises:
a light source (51), configured to generate a pulse optical signal, wherein the pulse optical signal enters the second optical fiber (4) and becomes the first pulse optical signal, and the pulse optical signal enters the fourth optical fiber (6) and becomes the second pulse optical signal;
a photoelectric detector (52), configured to: receive the first reflected optical signal or the second reflected optical signal, and convert the first reflected optical signal or the second reflected optical signal into an electrical signal, wherein the electrical signal is for generating an optical time domain reflectometer test curve; and
a circulator (53), comprising a twelfth port, a thirteenth port, and a fourteenth port, wherein the twelfth port is connected to the light source (51), the thirteenth port is connected to the optical switch (60), and the fourteenth port is connected to the photoelectric detector (52), wherein
the circulator (53) is configured to: transmit the pulse optical signal received from the twelfth port out from the thirteenth port; and transmit the first reflected optical signal or the second reflected optical signal received from the thirteenth port out from the fourteenth port.

8. The optical splitting system according to claim 6 or 7, wherein the optical-layer monitoring apparatus (200) further comprises:
a third optical splitting unit (80), comprising a fifteenth port (81), a sixteenth port (82), and a seventeenth port (83), wherein the fifteenth port (81) is separately connected to the sixteenth port (82) and the seventeenth port (83); and the fifteenth port (81) is connected to the fourth optical fiber (6), the sixteenth port (82) is connected to the optical switch (60) through a sixth optical fiber (8), and the seventeenth port (83) is connected to the control module (70) through a seventh optical fiber (9).

9. A passive optical network, wherein the passive optical network comprises:
an optical line termination (2000);
an optical network terminal (3000); and
the optical splitting system (1000) according to any one of claims 5 to 8, separately connected to the optical line termination (2000) and the optical line termination (2000).

10. The passive optical network according to claim 9, wherein the optical splitting system (1000) is configured to: determine, by polling the plurality of first optical path processing units (20), a port number of a second port (12) on which an upstream optical signal exists, and upload the port number of the second port (12) to the optical line termination (2000); and
the optical line termination (2000) is configured to: receive the upstream optical signal, and bind the optical network terminal (3000) transmiting the upstream optical signal with the port number of the corresponding second port (12).

11. The passive optical network according to claim 9, wherein the optical splitting system (1000) is configured to: in response to alarm instructions, determine, by polling a plurality of first optical path processing units (20), a port number of a second port (12) on which an upstream optical signal exists, and upload the port number of the second port (12) to the optical line termination (2000), wherein the alarm instructions are for prompting that an optical network terminal that emits light abnormally exists; and
the optical line termination (2000) is configured to determine that an optical network terminal (3000) corresponding to the port number of the second port (12) is the optical network terminal that emits light abnormally.

12. An optical fiber fault detection method, wherein the method comprises:
transmitting a first pulse optical signal to one second optical fiber in a plurality of second optical fibers, or transmitting a second pulse optical signal to a fourth optical fiber, wherein the plurality of second optical fibers are connected to a plurality of branch fibers respectively through a plurality of first optical path processing units, the fourth optical fiber is connected to a feeder fiber through a second optical path processing unit, the plurality of branch fibers are further connected to a plurality of second ports of a first optical splitting unit respectively through the plurality of first optical path processing units, the feeder fiber is further connected to a first port of the first optical splitting unit through the second optical path processing unit, and the first port is separately connected to the plurality of second ports;
receiving a first reflected optical signal from the second optical fiber, or receiving a second reflected optical signal from the fourth optical fiber; and
performing fault detection on the branch fiber based on the first reflected optical signal, or performing fault detection on the feeder fiber based on the second reflected optical signal.

13. The method according to claim 12, wherein the method further comprises:
determining, by polling the plurality of first optical path processing units, a port number of a second port on which an upstream optical signal exists; and
uploading the port number of the second port to an optical line termination, wherein the optical line termination is configured to bind an optical network terminal transmiting the upstream optical signal with the port number of the corresponding second port.

14. The method according to claim 12, wherein the method further comprises:
in response to alarm instructions, determining, by polling the plurality of first optical path processing units, a port number of a second port on which an upstream optical signal exists, wherein the alarm instructions is for prompting that an optical network terminal that emits light abnormally exists; and
uploading the port number of the second port to an optical line termination, wherein the optical line termination is configured to determine that an optical network terminal corresponding to the port number of the second port is the optical network terminal that emits light abnormally.
